# EUROPÄISCHE PATENTSCHRIFT

(11) **EP 3 213 010 B1**
(45) Veröffentlichungstag und Bekanntmachung des Hinweises auf die Patenterteilung: **30.01.2019**
(21) Anmeldenummer: 15793692.3
(22) Anmeldetag: 30.10.2015
(51) Int. Cl.: F24S 23/74, F24S 25/00, F24S 30/40

(54) **VORRICHTUNG ZUR VERANKERUNG EINES AUFBLASBAREN KONZENTRATOR-KISSENS**
DEVICE FOR ANCHORING AN INFLATABLE CONCENTRATOR CUSHION
DISPOSITIF POUR ANCRER UN COUSSIN GONFLABLE À CONCENTRATEUR

(30) Priorität: 31.10.2014 AT 507892014
(43) Veröffentlichungstag der Anmeldung: 06.09.2017
(73) Patentinhaber: Heliovis AG, 2351 Wiener Neudorf (AT)
(72) Erfinder: STÖGER, Elmar, A-2351 Wiener Neudorf (AT); TIEFENBACHER, Felix, A-2351 Wiener Neudorf (AT)
(74) Vertreter: Sonn & Partner Patentanwälte
(86) Internationale Anmeldenummer: PCT/AT2015/050275
(87) Internationale Veröffentlichungsnummer: WO 2016/065386

(56) Entgegenhaltungen:
- WO-A2-2012/006255
- WO-A2-2012/145774

## Beschreibung

Die Erfindung betrifft eine Vorrichtung gemäß dem Oberbegriff von Anspruch 1.

Die WO 2012/006255 A2 beschreibt ein Glashaus mit einem Dach, Querträgern und Stützen zur Aufhängung von Konzentratoren für Sonnenstrahlung. Als Konzentratoren sind Parabolrinnen vorgesehen, welche um ein verschwenkbares Gelenk gelagert sind, das über Aufhängungen an dem Träger des Glashauses befestigt ist.

Aus der WO 2012/145774 ist eine gattungsgemäße Vorrichtung zur Konzentration von Sonnenstrahlung in einem Absorber bekannt geworden. Die Vorrichtung weist einen aufblasbaren Konzentrator auf, welcher durch eine langgestreckte, im Wesentlichen zylindrische schlauchförmige Hülle aus mehreren Folienelementen gebildet ist. Die Hülle weist an der Oberseite ein transparentes Eintrittsfenster zum Durchtritt von Sonnenstrahlung auf. Weiters ist eine Reflektorfolie vorgesehen, mit welcher das Kissen in zumindest zwei getrennte Druckräume unterteilt wird. Die Reflektorfolie weist eine Spiegelfläche auf, mit welcher die eingekoppelte Sonnenstrahlung in Richtung eines Absorbers gebündelt wird. Zur Verankerung des Konzentrators ist ein Verankerungsgerüst vorgesehen. Das Verankerungsgerüst weist ein Nachführungssystem auf, um den kissenförmigen Konzentrator dem Sonnenlauf nachzuführen. Das Nachführungssystem weist mehrere das Konzentrator-Kissen umschließende Nachführungsringe auf, welche mittels Rollvorrichtungen drehbar gelagert sind. Die Nachführungsringe sind auf bodenseitigen Sockelelementen abgestützt.

Bei Testversuchen hat sich gezeigt, dass die am Boden abgestützen Nachführungsringe im Betrieb hohen Kippmomenten, insbesondere aufgrund von Windlasten, ausgesetzt sind. Um den Belastungen im Betrieb standzuhalten, mussten daher die Nachführungsringe vergleichsweise massiv ausgebildet werden. Dennoch konnte bei der bisherigen Ausführung ein Teil der äußeren Lasten nicht von dem schlauchförmigen Konzentrator ferngehalten werden. Infolge der äußeren Einflüsse wurden im Betrieb Verformungszustände des Konzentrators beobachtet. Solche Verformungen könnten jedoch die Lebensdauer des Konzentrators verkürzen bzw. Beschädigungen hervorrufen. Noch wesentlicher ist jedoch, dass die Einflüsse auf die Geometrie der gekrümmten Reflektorfolie den Wirkungsgrad des Konzentrators senken können.

Die US 2011/0100358 A1 beschreibt einen Parabol-Sonnenkollektor, welcher mit Schwenkringen dem Sonnenstand nachgeführt werden kann. Die Schwenkringe sind jedoch - wie beim oben erläuterten Stand der Technik - auf Rollen aufgelagert. In der ES 2 446 890 ist lediglich ein weiterer Sonnenkollektor mit unterseitiger Abstützung der Schwenkringe gezeigt. Die US 2010/0065045 A1 beschreibt einen weiteren Sonnenkollektor mit Schwenkringen, welche auf Rollen aufgelagert sind. Demnach weisen diese Ausführungen dieselben Nachteile bzw. Einschränkungen wie der Stand der Technik der WO 2012/145774 auf.

Die Aufgabe der vorliegenden Erfindung besteht also darin, die Nachteile des Standes der Technik zu lindern bzw. zu beseitigen. Die Erfindung setzt sich daher insbesondere zum Ziel, eine konstruktiv einfache, stabile und kostengünstig zu fertigende Vorrichtung der eingangs angeführten Art zu schaffen, mit welcher die Aufnahme äußerer Lasten, insbesondere Windlasten, verbessert wird, um den Wirkungsgrad des Konzentrators weiter zu steigern.

Diese Aufgabe wird durch eine Vorrichtung zur Konzentration von Sonnenstrahlung mit den Merkmalen von Anspruch 1 gelöst. Bevorzugte Ausführungen sind in den abhängigen Ansprüchen angegeben.

Erfindungsgemäß weist die Verankerungseinrichtung eine Aufhängeeinrichtung zum Aufhängen der Schwenkeinrichtung auf.

Im Unterschied zum Stand der Technik wird daher die Schwenk- und Halteeinrichtung für das Konzentrator-Kissen nicht mehr am Boden von der Unterseite her abgestützt, sondern oberseitig an einer Aufhängeeinrichtung aufgehängt. Demnach wird die Schwenkeinrichtung, an welcher im Betriebszustand das Konzentrator-Kissen befestigt ist, im Wesentlichen vollständig durch die Aufhängeeinrichtung getragen. Die Schwenk- bzw. Dreheinrichtung ist zum Verschwenken des aus biegsamen (Kunststoff-)Folienelementen zusammengesetzten Konzentrator-Kissens, vorzugsweise um dessen Längsachse, eingerichtet. Für die Zwecke dieser Offenbarung bedeutet die Aufhängung der Schwenkeinrichtung, dass die Befestigungsstellen zwischen der Aufhängeeinrichtung und der Schwenkeinrichtung ausschließlich oberhalb einer den Massenmittelpunkt der Schwenkeinrichtung aufweisenden Ebene angeordnet sind. Die Begriffe "oben" und "unten" beziehen sich hierbei auf die Betriebsstellung der Vorrichtung. Die Erfindung hat insbesondere den Vorteil, dass die äußeren Lasten, wie Windkräfte, besonders effizient aufgefangen und an ein Fundament am Standort abgeleitet werden können. Vorteilhaft ist insbesondere, dass der kissen- bzw. schlauchförmige Konzentrator weitgehend frei von äußeren Einflüssen gehalten wird. Dadurch kann die konkave Wölbung der Reflektorfolie zwischen dem oberen und dem unteren Druckraum des im Querschnitt vorzugsweise im Wesentlichen zylindrischen Konzentrators präzise eingehalten werden, so dass die Fokussierung der Sonnenstrahlung am Absorber mit hohem Wirkungsgrad erfolgt. Weiters ist die erfindungsgemäße Ausgestaltung dahingehend vorteilhaft, dass die Schwenkeinrichtung schlanker als beim Stand der Technik ausgeführt werden kann. Somit können Materialkosten eingespart werden. Weiters wird der Verschattungsgrad der Reflektorfolie verringert, wodurch der Wirkungsgrad weiter gesteigert werden kann.

Zum Aufhängen der Schwenkeinrichtung für das Konzentrator-Kissen ist es günstig, wenn die Aufhängeeinrichtung zumindest einen Trägerrahmen, vorzugsweise mehrere in Längsrichtung des Konzentrator-Kissens beabstandet angeordnete Trägerrahmen, aufweist, wobei der zumindest eine Trägerrahmen jeweils zumindest ein erstes Rahmenelement auf der einen Längsseite des Konzentrator-Kissens und ein zweites Rahmenelement auf der anderen Längsseite des Konzentrator-Kissens aufweist. Demnach sind das erste Rahmenelement und das zweite Rahmenelement auf den gegenüberliegenden Längsseiten des Konzentrator-Kissens, d.h. seitlich neben dem Konzentrator-Kissen, angeordnet. Das erste Rahmenelement weist eine erste Befestigungsstelle für die Schwenkeinrichtung auf der einen Längsseite des Konzentrator-Kissens auf, wobei das zweite Rahmenelement eine zweite Befestigungsstelle für die Schwenkeinrichtung auf der anderen Längsseite des Konzentrator-Kissens aufweist. Die Befestigungsstellen der Rahmenelemente sind oberhalb des Massenmittelpunkts der Schwenkeinrichtung angeordnet. An der Unterseite des Konzentrators sind keine Stützeinrichtungen vorgesehen, so dass die Schwenkeinrichtung ausschließlich an den Rahmenelementen aufgehängt ist. Demnach wird das Gewicht der Schwenkeinrichtung, im montierten Zustand auch das Gewicht der weiteren Komponenten, wie Konzentrator-Kissen, Absorberaufhängung und Absorber, im Wesentlichen vollständig durch den Trägerrahmen getragen. Bevorzugt sind mehrere solche Trägerrahmen vorgesehen, deren Rahmenelemente insbesondere in regelmäßigen Abständen seitlich neben dem Konzentrator-Kissen angeordnet sind. Die Bezeichnung "Längsseite" bezieht sich hierbei darauf, dass das Konzentrator-Kissen eine langgestreckte Gestalt mit zwei Längsseiten aufweist. Darüber hinaus weist das Konzentrator-Kissen am vorderen und hinteren Ende je ein Endstück auf, mit welchem die luftgefüllten Hohl- bzw. Druckräume im Wesentlichen luftdicht verschlossen werden. Vorteilhafterweise kann der Trägerrahmen sehr gut aus Standardprofilen hergestellt werden, was schon bei geringen Stückzahlen zu erheblichen Kostenvorteilen führt.

Um die Stabilität der Aufhängeeinrichtung zu erhöhen, ist es von Vorteil, wenn der Trägerrahmen ein drittes Rahmenelement oberhalb des Konzentrator-Kissens aufweist, welches das erste Rahmenelement auf der einen Längsseite des Konzentrator-Kissens mit dem zweiten Rahmenelement auf der anderen Längsseite des Konzentrator-Kissens verbindet. Bei dieser Ausführung erstreckt sich der Trägerrahmen daher von der einen Längsseite des Konzentrator-Kissens über die Oberseite des Konzentrator-Kissens hinweg auf die andere Längsseite des Konzentrator-Kissens, so dass das Konzentrator-Kissen im montierten Betriebszustand vollständig innerhalb des Trägerrahmens angeordnet ist. Die Schwenkeinrichtung ist bevorzugt an der Unterseite des Trägerrahmens aufgehängt. Demnach wird die Schwenkeinrichtung vorzugsweise im Wesentlichen vollständig von dem Trägerrahmen eingerahmt. Diese Ausführung hat sich als besonders günstig erwiesen, um die im Betrieb auftretenden Kräfte, beispielsweise Windkräfte, aufzunehmen.

Die Herstellungskosten können reduziert werden, wenn das erste Rahmenelement und/oder das zweite Rahmenelement aus zumindest einem ersten geraden Rahmenteil und einem zweiten geraden Rahmenteil zusammengesetzt ist, welche in einem Winkel zueinander angeordnet sind. Das zweite Rahmenteil schließt daher unter einem Winkel an das erste Rahmenteil an. Bevorzugt ist das zweite Rahmenteil zum Konzentrator-Kissen hin geneigt angeordnet. Dadurch verläuft der Trägerrahmen nahe an dem im Querschnitt runden Konzentrator-Kissen, wodurch die Stabilität der Anordnung erhöht wird. Bevorzugt ist auch das dritte Rahmenelement geradlinig ausgebildet, wobei sich das dritte Rahmenelement insbesondere in einer im Wesentlichen horizontalen Ebene oberhalb der Schwenkeinrichtung mit dem Konzentrator-Kissen erstreckt.

Um den Konzentrator am Untergrund zu verankern, ist es günstig, wenn das erste Rahmenteil im Betriebszustand im Wesentlichen senkrecht angeordnet ist, wobei das erste Rahmenteil am unteren Ende in einem Sockelelement am Untergrund des Standortes verankert ist.

Bevorzugt sind das erste Rahmenelement und/oder das zweite Rahmenelement und/oder das dritte Rahmenelement als Profilelemente, insbesondere als I-Profile, ausgebildet, welche in einer Ebene im Wesentlichen senkrecht zur Längsrichtung des Konzentrator-Kissens erstreckt sind. Die Profilelemente weisen in Richtung deren Längserstreckung denselben Querschnitt auf. Solche Profilelemente sind im Bauwesen in verschiedensten Ausführungen, beispielsweise mit I-förmigem Querschnitt, bekannt. Dadurch können die Herstellungskosten niedrig gehalten werden.

Gemäß einer besonders bevorzugten Ausführung weist die Aufhängeeinrichtung zumindest zwei Trägerrahmen auf, welche über zumindest ein Spannelement, insbesondere ein Seilelement, miteinander verbunden sind. Diese Ausführung bringt insbesondere den Vorteil mit sich, dass die einzelnen Trägerrahmen schlank ausgebildet werden können, wobei durch die Verspannung zwischen den Trägerrahmen dennoch eine hohe Stabilität der Anordnung erzielt wird. Hierbei ist zudem vorteilhaft, dass die Trägerrahmen aus Profilelementen keine nennenswerte Verschattung des Konzentrator-Kissens verursachen, welche den Wirkungsgrad des Konzentrators senken würde. Vorteilhafterweise bietet diese Ausführung der Aufhängeeinrichtung zudem Windkräften nur geringen Widerstand, wodurch einer Beschädigung der Anlage vorgebeugt werden kann. Die Trägerrahmen sind bevorzugt im Wesentlichen senkrecht zur Längsrichtung des Konzentrator-Kissens angeordnet, wobei die Spannelemente eine Verspannung der Trägerrahmen in Längsrichtung des Konzentrator-Kissens bewirken.

Um die Verankerungseinrichtung in Längsrichtung des Konzentrator-Kissens gleichmäßig zu verspannen, ist es vorteilhaft, wenn die zumindest zwei Trägerrahmen auf beiden Längsseiten des Konzentrator-Kissens über jeweils zumindest ein Spannelement, vorzugsweise über jeweils zumindest zwei über Kreuz gespannte Spannelemente, miteinander verbunden sind.

Um eine Abspannung der Aufhängeeinrichtung zu erzielen, ist es günstig, wenn zumindest ein Trägerrahmen, insbesondere ein bezogen auf die Längsrichtung des Konzentrator-Kissens vorderer Trägerrahmen und/oder ein bezogen auf die Längsrichtung des Konzentrator-Kissens hinterer Trägerrahmen, über ein weiteres Spannelement an einem Bodenelement abgespannt ist. Bevorzugt sind Spannelemente auf beiden Längsseiten des Konzentrator-Kissens von einem Bodenelement an der Vorderseite des Konzentrators über die einzelnen Trägerrahmen zu einem Bodenelement an der Hinterseite des Konzentrators geführt.

Um die Nachführung des Konzentrator-Kissens an den Sonnenlauf, d.h. die momentane Position der Sonne über dem Standort, zu ermöglichen, weist die Schwenkvorrichtung zumindest ein das Konzentrator-Kissen in dessen Umfangsrichtung umschließendes Schwenkelement, insbesondere einen Schwenkring, auf, wobei vorzugsweise mehrere in Längsrichtung des Konzentrator-Kissens beabstandete Schwenkelemente, insbesondere Schwenkringe, jeweils an einem Trägerrahmen der Aufhängeeinrichtung aufgehängt sind. Solche Schwenk- bzw. Drehringe sind im Stand der Technik, vgl. z.B. die WO 2012/145774, an sich bekannt. Bei dem Stand der Technik waren die Schwenkringe jedoch an der Unterseite auf Rollenlagerungen abgestützt. Die Nachteile dieser Ausführung können nun dadurch behoben werden, dass die Schwenkringe an der Aufhängeeinrichtung aufgehängt sind.

Zur Nachführung des Konzentrator-Kissens an den Sonnenlauf ist es vorteilhaft, wenn zwischen der Aufhängeeinrichtung und der Schwenkeinrichtung eine Schwenklagereinrichtung, insbesondere eine Rollenlagerung, vorgesehen ist. Solche Rollenlagerungen sind im Stand der Technik, vgl. z.B. die WO 2012/145774, an sich bekannt. Die Rollenlagerung weist Rollenelemente auf, welche insbesondere an einer Laufkatze vorgesehen sind. Die Rollenelemente sind mit einem Antrieb verbunden, wobei die Rollenelemente im angetriebenen Zustand durch einen Reibschluss beim Abrollen auf der Schwenkeinrichtung ein Drehmoment erzeugen, welches eine Verschwenkung der Schwenkeinrichtung mit dem Konzentrator-Kissen um eine Achse, insbesondere um die Längsachse des Konzentrator-Kissens, bewirkt.

Um die Kraftaufbringung auf die Schwenkeinrichtung zu verbessern, weist die Schwenklagereinrichtung bevorzugt eine erste Rollenlagerung an dem ersten Rahmenelement der Aufhängeeinrichtung und eine zweite Rollenlagerung an dem zweiten Rahmenelement der Aufhängeeinrichtung auf. Demnach wird die Antriebskraft an zumindest zwei Stellen auf die Schwenkeinrichtung übertragen. Gemäß einer besonders bevorzugten Ausführung weist die Schwenkeinrichtung ein Führungselement für die Rollenlagerung auf, wobei ein äußeres Rollenelement zum Abrollen auf der Oberseite des Führungselements und ein inneres Rollenelement zum Abrollen auf der Innenseite des Führungselements vorgesehen sind. Das innere Rollenelement ist hierbei für den Normalbetrieb vorgesehen, während das äußere Rollenelement gegen ein Abheben des Konzentrator-Kissens bei stärkeren Windlasten eingerichtet ist. Die Ausdrücke "innen" und "außen" beziehen sich hierbei auf die radiale Erstreckung des Konzentrator-Kissens.

Bevorzugt weist die Schwenkeinrichtung zumindest ein Schwenkelement mit I-förmigem oder T-förmigem Querschnitt auf, wobei ein oberer Flansch des I-förmigen oder T-förmigen Schwenkelements als Führungselement für die Rollenlagerung ausgebildet ist. Dadurch kann das Schwenkelement aus einem Standardteil gefertigt sein, wodurch die Fertigungskosten verringert werden können, wobei zugleich der obere Flansch als Führungselement für die Rollenlagerung ausgebildet ist.

Um das Konzentrator-Kissen bedarfsweise, insbesondere bei Auftreten von stärkeren Windlasten, abzuschirmen, ist es günstig, wenn an der Aufhängeeinrichtung eine Abdeckeinrichtung vorgesehen ist, welche zwischen einer das Konzentrator-Kissen zumindest teilweise abdeckenden Schutzstellung und einer das Konzentrator-Kissen im Wesentlichen vollständig freiliegend anordnenden Staustellung überführbar ist. Vorzugsweise ist je eine Abdeckeinrichtung an benachbarten Trägerrahmen befestigt. Die Abdeckeinrichtung kann Lamellenelemente aufweisen, welche in der Staustellung in einem zusammengeklappten Zustand und in der Schutzstellung in einem auseinandergeklappten Zustand angeordnet sind. Bevorzugt ist die Abdeckeinrichtung in der Schutzstellung im Wesentlichen vertikal angeordnet. In der Schutzstellung wird vorzugsweise nur der untere Teil des Konzentrator-Kissens abgeschirmt, wobei der obere Teil des Konzentrator-Kissens mit dem Eintrittsfenster freigelassen wird.

Gemäß einer besonders bevorzugten Ausführung ist die Schwenkeinrichtung mit einer Halteeinrichtung für das Konzentrator-Kissen verbunden, welche zumindest einen in Längsrichtung des Konzentrator-Kissens erstreckten Längsträger, insbesondere Fachwerkträger, aufweist. Der Längsträger erstreckt sich vorzugsweise im Wesentlichen über die gesamte Länge zwischen gegenüberliegenden Endstücken des Konzentrator-Kissens. Dadurch können die am Konzentrator-Kissen angreifenden Kräfte gleichmäßig aufgenommen und über die Schwenkeinrichtung und die Verankerungseinrichtung abgetragen werden. Diese Ausführung weist eine wesentlich höhere Stabilität, insbesondere gegenüber Windkräften, als die beim Stand der Technik, vgl. die WO 2012/145774, vorgesehenen lokalen Befestigungsstellen zwischen den Schwenkringen und dem Konzentrator-Kissen auf. Besonders vorteilhaft ist, dass durch die Anordnung der Längsträger Einflüsse auf die Krümmung der Reflektorfolie reduziert werden können, wodurch die Energieausbeute wesentlich gesteigert werden kann.

Um unerwünschte Verformungen des Konzentrator-Kissens im Betrieb möglichst zu verhindern, ist es günstig, wenn die Halteeinrichtung für das Konzentrator-Kissen einen ersten Längsträger, insbesondere einen ersten Fachwerkträger, und einen zweiten Längsträger, insbesondere einen zweiten Fachwerkträger, aufweist, wobei der erste (obere) Längsträger mit einer der Sonnenstrahlung zugewandten Oberseite des Konzentrator-Kissens und der zweite (untere) Längsträger mit einer von der Sonnenstrahlung abgewandten Unterseite des Konzentrator-Kissens verbunden ist. Demnach ist der erste Längsträger über eine allseitig abgedichtete Befestigungs- bzw. Durchtrittsöffnung mit einer das Eintrittsfenster aufweisenden Deckfolie des Konzentrator-Kissens verbunden. Am ersten Längsträger ist der Absorber aufgehängt. Der zweite Längsträger ist über eine weitere allseitig abgedichtete Befestigungs- Durchtrittsöffnung mit einer Bodenfolie des Konzentrator-Kissens verbunden. Dadurch kann der Konzentrator in Längsrichtung stabilisiert werden. Zur Abdichtung an den Befestigungsöffnungen kann ein Kedersystem vorgesehen sein, wobei ein Beispiel eines solchen Kedersystems in der WO 2012/145774 gezeigt ist. Beide Längsträger sind vorzugsweise innerhalb des Konzentrator-Kissens angeordnet.

Im Betriebszustand ist das Konzentrator-Kissen an der Verankerungseinrichtung montiert.

Die Erfindung wird nachstehend anhand eines bevorzugten Ausführungsbeispiels, auf das sie jedoch nicht beschränkt sein soll, noch weiter erläutert. In der Zeichnung zeigen:
Fig. 1a eine schaubildliche Ansicht einer erfindungsgemäßen Vorrichtung zur Halterung eines Konzentrator-Kissens (vgl. Fig. 1b, 1c und Fig. 2), bei welcher mehrere Schwenkringe zum Verschwenken des Konzentrator-Kissens an einem Trägerrahmen aufgehängt sind;
Fig. 1b eine schaubildliche Ansicht der erfindungsgemäßen Vorrichtung gemäß Fig. 1a, wobei zusätzlich das Konzentrator-Kissen (ohne dessen Endstücke) im montierten Zustand und eine Abdeckeinrichtung ersichtlich sind;
Fig. 1c eine weitere schaubildliche Ansicht der erfindungsgemäßen Vorrichtung gemäß Fig. 1b, wobei das Konzentrator-Kissen im Betriebszustand einschließlich dessen Endstücke ersichtlich ist;
Fig. 2 eine Querschnittsansicht der Vorrichtung gemäß Fig. 1, wobei das Konzentrator-Kissen im montierten Zustand ersichtlich ist;
Fig. 3 eine schaubildliche Detailansicht eines Ausschnitts der Vorrichtung gemäß Fig. 1, 2, wobei die Befestigung eines das Konzentrator-Kissen tragenden Längsträgers am Schwenkring ersichtlich ist; und

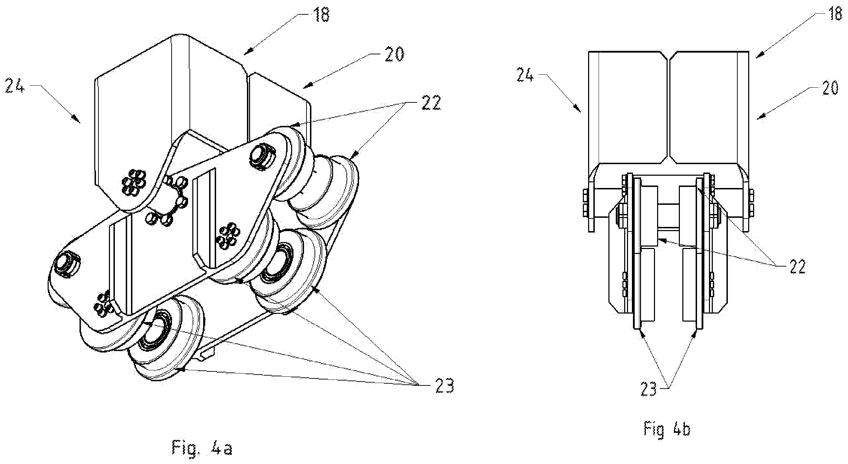

Fig. 4a und Fig. 4b je eine schaubildliche Ansicht einer Schwenklagereinrichtung zum Verschwenken der Schwenkeinrichtung.

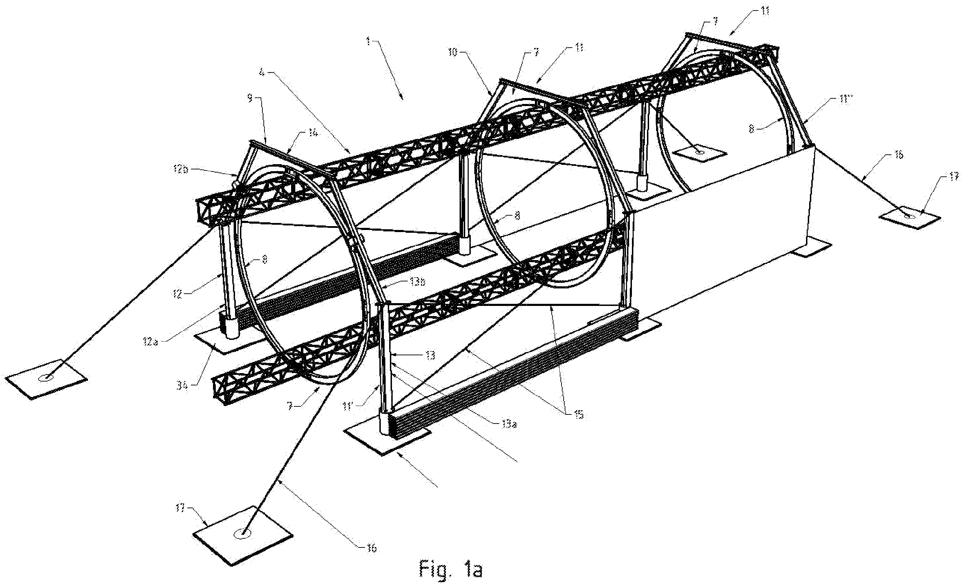

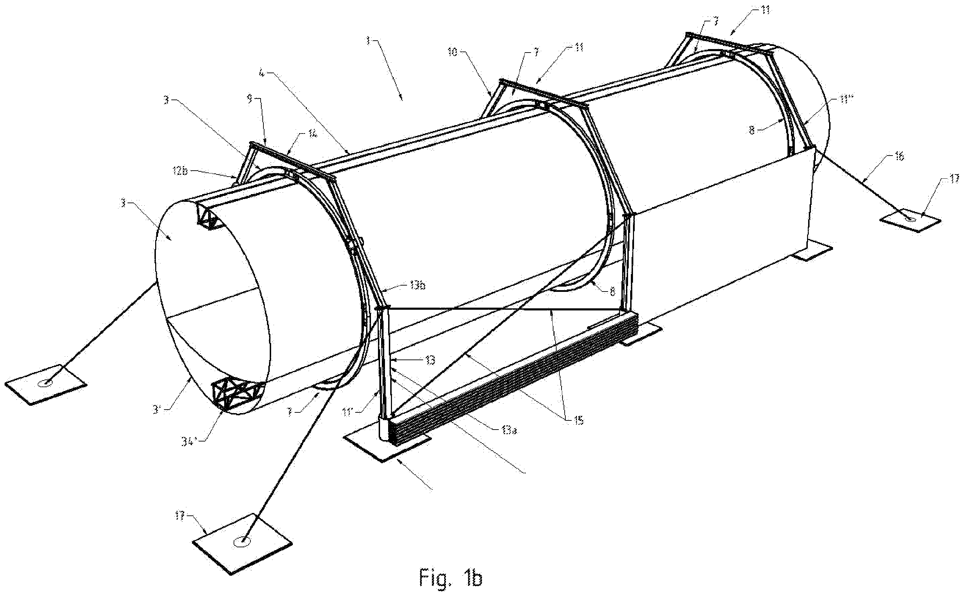

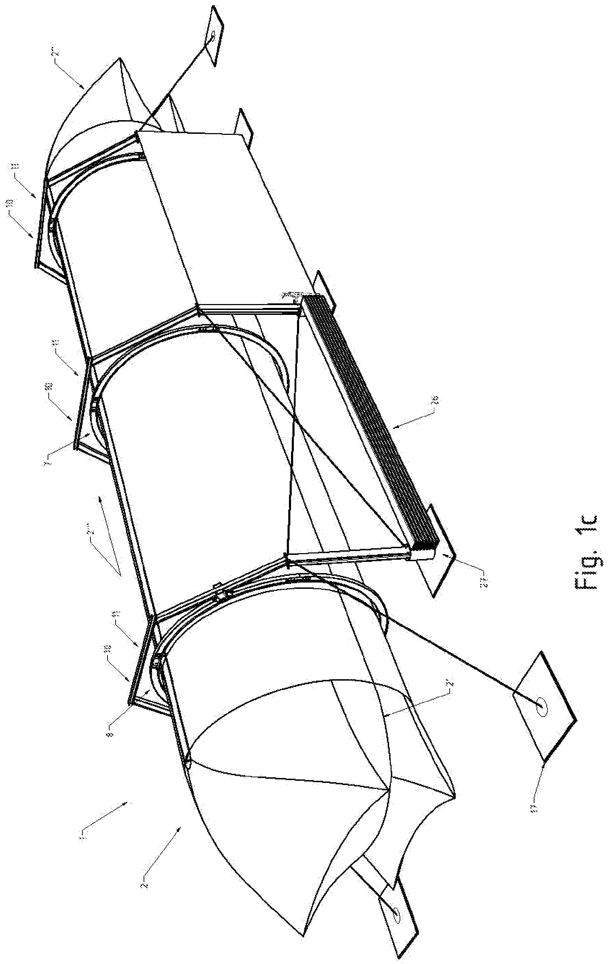

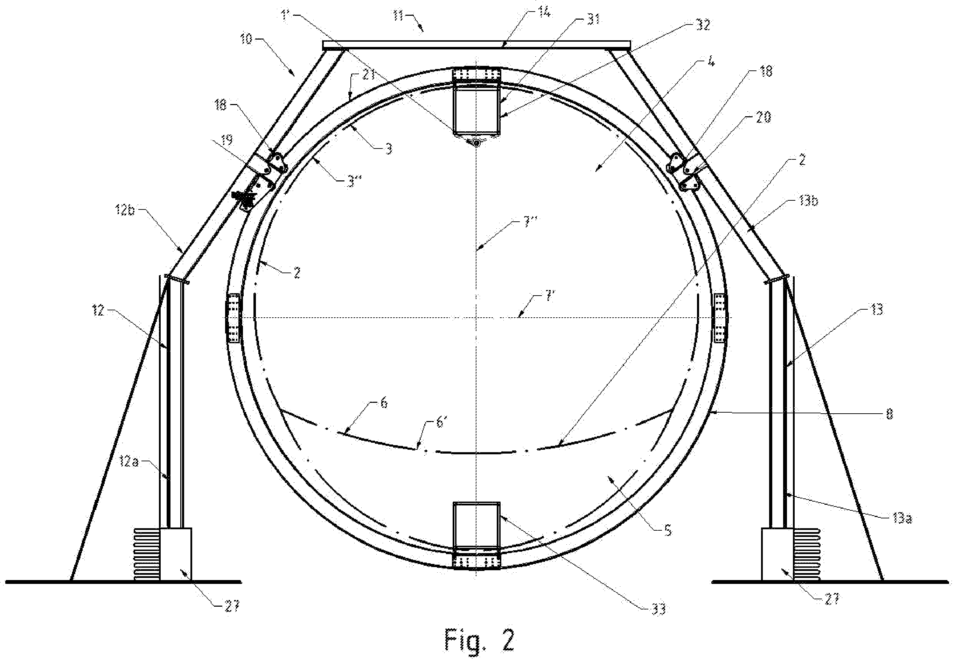

In Fig. 1 ist eine Vorrichtung 1 zur Halterung eines aufblasbaren Konzentrator-Kissens 2 gezeigt, welches in Fig. 2 im Querschnitt ersichtlich ist (vgl. auch Fig. 1b, 1c). Das Konzentrator-Kissen 2 weist ein Deckfolienelement 3" mit einem lichtdurchlässigen Eintrittsfenster 3 zum Einkoppeln von Sonnenstrahlung und eine das Konzentrator-Kissen 2 in zumindest zwei Hohlräume 4, 5 unterteilende, im Betriebszustand gekrümmte Reflektorfolie 6 zum Konzentrieren der Sonnenstrahlung in einem Absorber 1' auf. Die Reflektorfolie 6 weist eine Spiegelfläche 6' auf, welche die eingekoppelte Sonnenstrahlung in Richtung des Absorbers 1' bündelt. Der Absorber 1', worunter auch ein Solarpaneel zu verstehen ist, befindet sich im Fokusbereich der Spiegelfläche 6' innerhalb des oberen, an das Eintrittsfenster 3 anschließenden Hohlraums 4 des Konzentrator-Kissens 2. Als Absorber 1' kann insbesondere ein mediendurchströmtes Rohr oder ein Photovoltaikelement vorgesehen sein. Der Konzentrator kann somit sowohl für konzentrierte Photovoltaik (CPV = Concentrated Photovoltaics) als auch für konzentrierte Solarthermie (CSP = Thermal Concentrated Solar Power) verwendet werden. Im Betrieb des Konzentrators wird in den gasbefüllten Hohlräumen 4, 5 ein Druckunterschied ausgebildet, wodurch die Reflektorfolie 6 gleichmässig konkav gewölbt wird, so dass die eingekoppelte Sonnenstrahlung von der Spiegelfläche 6' in den Absorber 1' fokussiert wird. Das Konzentrator-Kissen 2 ist in dem mit Druckluft in den Hohlräumen 4, 5 befüllten Zustand grundsätzlich selbsttragend ausgelegt, so dass gegenüber herkömmlichen Solarkonzentratoren ein erheblich niedrigeres Gewicht realisierbar ist. Wie im Stand der Technik bekannt, ist das Konzentrator-Kissen 2 aus einzelnen dünnwandigen (Kunststoff-)Folien aufgebaut; für das Eintrittsfenster 3 ist eine transparente Folie vorgesehen.

Wie aus Fig. 1 weiters ersichtlich, ist eine Schwenkeinrichtung 7 zum Verschwenken des Konzentrator-Kissens 2 vorgesehen. Die Schwenkeinrichtung 7 weist mehrere Schwenkelemente in Form von Schwenkringen 8 auf, welche das Konzentrator-Kissen 2 in dessen Umfangsrichtung umschließen. Die Schwenkringe 8 der Schwenkeinrichtung 7 bilden zusammen ein Nachführungssystem, um das Konzentrator-Kissen 2 im Betrieb dem Sonnenlauf nachzuführen. Hierfür sind die Schwenkringe der Schwenkeinrichtung 7 dazu eingerichtet, das Konzentrator-Kissen 2 um zumindest eine Achse des Konzentrator-Kissens 2, hier speziell die Längsachse des Konzentrator-Kissens 2, schwenkbar zu lagern.

Wie aus Fig. 1, 2 weiters ersichtlich, ist zudem eine Verankerungseinrichtung 9 für die Schwenkeinrichtung 7 vorgesehen, wobei die Verankerungseinrichtung 9 in der gezeigten Ausführung eine Aufhängeeinrichtung 10 zum Aufhängen der Schwenkringe 8 der Schwenkeinrichtung 7 aufweist. Die Aufhängeeinrichtung 10 weist mehrere in Längsrichtung 2''' des Konzentrator-Kissens 2 (vgl. Fig. 1c) beabstandet angeordnete Trägerrahmen 11 auf, welche Befestigungsstellen für die Schwenkringe 8 der Schwenkeinrichtung 7 aufweisen. Die Befestigungsstellen sind oberhalb einer den Massenmittelpunkt aufweisenden Ebene 7' (vgl. Fig. 2) der Schwenkringe 8 angeordnet. Jeder Trägerrahmen 11 weist ein erstes Rahmenelement 12 auf der einen Längsseite des Konzentrator-Kissens 2 und ein zweites Rahmenelement 13 auf der anderen Längsseite des Konzentrator-Kissens 2 auf. Darüber hinaus weist der Trägerrahmen 11 ein drittes Rahmenelement 14 oberhalb der Schwenkringe 8 mit dem Konzentrator-Kissen 2 auf. Das erste Rahmenelement 12 auf der einen Längsseite des Konzentrator-Kissens 2 ist über das dritte Rahmenelement 14 mit dem zweiten Rahmenelement 13 auf der anderen Längsseite des Konzentrator-Kissens 2 verbunden. Demnach erstreckt sich der Trägerrahmen 11 bogenförmig von der einen Längsseite des Konzentrator-Kissens 2 über das Konzentrator-Kissen 2 hinweg auf die andere Längsseite des Konzentrator-Kissens 2.

Wie aus Fig. 1, 2 weiters ersichtlich, bestehen das erste Rahmenelement 12 und das zweite Rahmenelement 13 jeweils aus einem ersten geraden bzw. linearen Rahmenteil 12a, 13a und einem zweiten geraden bzw. linearen Rahmenteil 12b, 13b. Das erste Rahmenteil 12a, 13a ist im Betriebszustand im Wesentlichen senkrecht angeordnet, wobei das untere Ende des ersten Rahmenteils 12a, 13a in einem Sockelelement 27 montiert ist. Das zweite Rahmenteil 12b, 13b ist vom oberen Ende des ersten Rahmenteils 12a, 13a nach innen, zum Konzentrator-Kissen 2 hin abgewinkelt.

Wie aus Fig. 1, 2 weiters ersichtlich, sind das erste Rahmenelement 12, das zweite Rahmenelement 13 und das dritte Rahmenelement 14 als langestreckte Profilelemente ausgebildet, welche in der gezeigten Ausführungsform einen I-förmigen Querschnitt aufweisen. Die Rahmenelemente 12, 13, 14 sind in einer Ebene im Wesentlichen senkrecht zur Längsrichtung des Konzentrator-Kissens 2 angeordnet.

Wie aus Fig. 1 weiters ersichtlich, weist die Aufhängeeinrichtung 10 mehrere, in der gezeigten Ausführung drei, Trägerrahmen 11 auf, welche über mehrere Spannelemente 15 in Form von Seilelementen miteinander verbunden sind. Die Anzahl der Trägerrahmen 11 hängt von der Länge des Konzentrator-Kissens 2 ab. Die Trägerrahmen 11 tragen jeweils einen Schwenkring 8, welcher das Konzentrator-Kissen 2 umgibt. In der gezeigten Ausführung sind einerseits die ersten Rahmenelemente 12 der Trägerrahmen 11 auf der einen Längsseite des Konzentrator-Kissens 2 über Spannelemente 15 miteinander verspannt, andererseits sind Spannelemente 15 zwischen den zweiten Rahmenelementen 13 der Trägerrahmen 11 auf der anderen Längsseite des Konzentrator-Kissens 2 vorgesehen. Auf beiden Längsseiten sind in der gezeigten Ausführung zwei Spannelemente 15 zwischen den Trägerrahmen 11 über Kreuz gespannt. Der vordere Trägerrahmen 11' und der hintere Trägerrahmen 11", jeweils bezogen auf die Längsrichtung des Konzentrator-Kissens 2, sind über weitere Spannelemente 16 auf beiden Längsseiten des Konzentrator-Kissens 2 an Bodenelementen 17 abgespannt. In der gezeigten Ausführung sind die weiteren Spannelemente 16 durch Endbereiche von Spannelementen 15 zwischen den Trägerrahmen 11 gebildet.

Wie aus Fig. 2 ersichtlich, sind zwischen der Aufhängeeinrichtung 10 und den Schwenkringen 8 Schwenklagereinrichtungen 18 in Form von Rollenlagerungen 19, 20 vorgesehen. In der gezeigten Ausführung ist eine erste Rollenlagerung 19 an dem ersten Rahmenelement 12 der Aufhängeeinrichtung 10 und eine zweite Rollenlagerung 20 an dem zweiten Rahmenelement 13 der Aufhängeeinrichtung 10 vorgesehen.

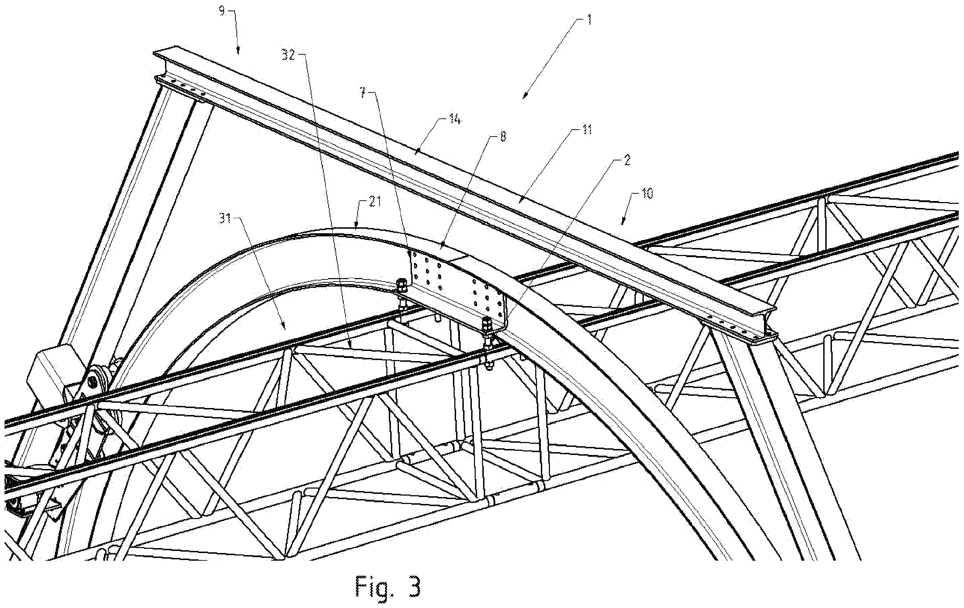

Wie aus Fig. 3 ersichtlich, weisen die Schwenkringe 8 jeweils ein Führungselement 21 für die Rollenlagerungen 19, 20 auf, wobei äußere Rollenelemente 22 auf der Oberseite des Führungselements 21 und innere Rollenelemente 23 auf der Innenseite des Führungselements 21 abrollen. Die Rollenelemente 22, 23 der Rollenlagerungen 19, 20 sind an Laufkatzen 24 montiert, welche an der Unterseite des Schwenkrings 8 befestigt sind. In der gezeigten Ausführung weisen die Schwenkringe 8 jeweils einen I-förmigen Querschnitt auf, wobei obere Flansche der I-förmigen Schwenkringe 8 als Führungselemente 21 für die Rollenlagerungen 19, 20 ausgebildet sind.

Wie aus Fig. 1b ersichtlich, ist an der Aufhängeeinrichtung 10 eine Abdeckeinrichtung vorgesehen, welche zwischen einer das Konzentrator-Kissen 2 zumindest teilweise abdeckenden Schutzstellung und einer das Konzentrator-Kissen 2 im Wesentlichen vollständig freiliegend anordnenden Staustellung überführbar ist. In der gezeigten Ausführung sind mehrere Abdeckeinrichtungen 26 jeweils zwischen zwei benachbarten Trägerrahmen 11 an den ersten Rahmenelementen 12 auf der einen Längsseite des Konzentrator-Kissens 2 bzw. an den ersten Rahmenelementen 13 auf der anderen Längsseite des Konzentrator-Kissens 2 befestigt. Die Abdeckeinrichtungen 26 bestehen in der gezeigten Ausführung aus mehreren miteinander verbundenen Lamellenelementen, welche zwischen einer zusammengeschobenen Stellung und einer auseinandergezogenen Stellung überführbar sind. In der Darstellung der Fig. 1b sind die beiden vorderen Abdeckeinrichtungen in der zusammengeschobenen Stellung angeordnet, in welcher Windkräfte an der unteren Hälfte des Konzentrator-Kissens 2 angreifen können. Die beiden hinteren Abdeckeinrichtungen sind hingegen in der auseinandergezogenen Stellung angeordnet, in welcher Windkräfte vom unteren Bereich des Konzentrator-Kissens 2 ferngehalten werden können. Die Abdeckeinrichtungen können motorisch oder manuell zwischen der Staustellung und der Schutzstellung überführt werden.

Wie aus Fig. 1, 3 ersichtlich, weist die Vorrichtung 1 zudem eine Halteeinrichtung 31 für das Konzentrator-Kissen 2 auf, welche (jeweils bezogen auf die Betriebsstellung) einen ersten (oberen) Längsträger 32 und einen zweiten (unteren) Längsträger 33 aufweist. Der obere Längsträger 32 trägt den Absorber 1' (vgl. Fig. 2), wohingegen der untere Längsträger 33 zur Ableitung von äußeren Lasten beiträgt. Beide Längsträger 32, 33 erstrecken sich in Längsrichtung des Konzentrator-Kissens 2 zwischen einem vorderen Endstück 2' und einem hinteren Endstück 2" an den Stirnseiten des Konzentrator-Kissens 2 (vgl. Fig. 1c).

Wie aus der Zeichnung weiters ersichtlich, ist der obere Längsträger 32 innenseitig am oberen Bereich der Schwenkringe 8 aufgehängt. Der untere Längsträger 33 ist ebenfalls innenseitig, aber im unteren Bereich der Schwenkringe 8 angebracht. Der obere Längsträger 32 ist mit einer der Sonnenstrahlung zugewandten Oberseite des Konzentrator-Kissens 2 verbunden. Der untere Längsträger 33 ist mit einer von der Sonnenstrahlung abgewandten Unterseite des Konzentrator-Kissens 2 verbunden. Die Längsträger 32, 33 sind in der gezeigten Ausführung als Fachwerkträger ausgeführt. Wie aus Fig. 2 ersichtlich, sind die Längsträger an einer den Mittelpunkt des Schwenkrings 8 aufweisenden Ebene 7" angeordnet.

## Patentansprüche

1. Vorrichtung zur Konzentration von Sonnenstrahlung in einem Absorber (1') mit einem aufblasbaren Konzentrator-Kissen (2), welches ein lichtdurchlässiges Eintrittsfenster (3) zum Einkoppeln von Sonnenstrahlung und eine das Konzentrator-Kissen (2) in zumindest zwei Hohlräume (4, 5) unterteilende Reflektorfolie (6) zum Konzentrieren der Sonnenstrahlung in dem Absorber (1') aufweist, und mit einer Vorrichtung (1) zur Halterung des aufblasbaren Konzentrator-Kissens (2), mit einer Schwenkeinrichtung (7) zum Verschwenken des Konzentrator-Kissens (2) insbesondere um dessen Längsachse, wobei die Schwenkeinrichtung (7) zumindest ein das Konzentrator-Kissen (2) in dessen Umfangsrichtung umschließendes Schwenkelement aufweist, und mit einer Verankerungseinrichtung (9) zur Verankerung der Schwenkeinrichtung (7), **dadurch gekennzeichnet, dass** die Verankerungseinrichtung (9) eine Aufhängeeinrichtung (10) zum Aufhängen der Schwenkeinrichtung (7) aufweist.

2. Vorrichtung (1) nach Anspruch 1, **dadurch gekennzeichnet, dass** die Aufhängeeinrichtung (10) zumindest einen Trägerrahmen (11; 11', 11"), vorzugsweise mehrere in Längsrichtung des Konzentrator-Kissens (2) beabstandet angeordnete Trägerrahmen (11; 11', 11"), aufweist, wobei der zumindest eine Trägerrahmen (11; 11', 11'') jeweils zumindest ein erstes Rahmenelement (12) auf der einen Längsseite des Konzentrator-Kissens (2) und ein zweites Rahmenelement (13) auf der anderen Längsseite des Konzentrator-Kissens (2) aufweist.

3. Vorrichtung (1) nach Anspruch 2, **dadurch gekennzeichnet, dass** der Trägerrahmen (11; 11', 11'') ein drittes Rahmenelement (14) oberhalb des Konzentrator-Kissens (2) aufweist, welches das erste Rahmenelement (12) auf der einen Längsseite des Konzentrator-Kissens (2) mit dem zweiten Rahmenelement (13) auf der anderen Längsseite des Konzentrator-Kissens (2) verbindet.

4. Vorrichtung (1) nach Anspruch 2 oder 3, **dadurch gekennzeichnet, dass** das erste Rahmenelement (12) und/oder das zweite Rahmenelement (13) aus zumindest einem ersten geraden Rahmenteil (12a, 13a) und einem zweiten geraden Rahmenteil (12b, 13b) zusammengesetzt ist, welche in einem Winkel zueinander angeordnet sind, wobei bevorzugt das erste Rahmenteil (12a, 13a) im Betriebszustand im Wesentlichen senkrecht angeordnet und das erste Rahmenteil (12a, 13a) am unteren Ende in einem Sockelelement (34) verankert ist.

5. Vorrichtung (1) nach einem der Ansprüche 2 bis 4, **dadurch gekennzeichnet, dass** das erste Rahmenelement (12) und/oder das zweite Rahmenelement (13) und/oder das dritte Rahmenelement (14) als Profilelemente, insbesondere als I-Profile, ausgebildet sind, welche in einer Ebene im Wesentlichen senkrecht zur Längsrichtung des Konzentrator-Kissens (2) erstreckt sind.

6. Vorrichtung (1) nach einem der Ansprüche 2 bis 5, **dadurch gekennzeichnet, dass** die Aufhängeeinrichtung (10) zumindest zwei Trägerrahmen (11; 11', 11'') aufweist, welche über zumindest ein Spannelement (14), insbesondere ein Seilelement, miteinander verbunden sind.

7. Vorrichtung (1) nach Anspruch 6, **dadurch gekennzeichnet, dass** die zumindest zwei Trägerrahmen (11; 11', 11'') auf beiden Längsseiten des Konzentrator-Kissens (2) über jeweils zumindest ein Spannelement (15), vorzugsweise über jeweils zumindest zwei über Kreuz gespannte Spannelemente (15), miteinander verbunden sind.

8. Vorrichtung (1) nach Anspruch 6 oder 7, **dadurch gekennzeichnet, dass** zumindest ein Trägerrahmen (11), insbesondere ein bezogen auf die Längsrichtung des Konzentrator-Kissens (2) vorderer Trägerrahmen (11') und/oder ein bezogen auf die Längsrichtung des Konzentrator-Kissens (2) hinterer Trägerrahmen (11''), über ein weiteres Spannelement (16) an einem Bodenelement (17) abgespannt ist.

9. Vorrichtung (1) nach einem der Ansprüche 1 bis 8, **dadurch gekennzeichnet, dass** das Schwenkelement einen Schwenkring (8) aufweist, wobei vorzugsweise mehrere in Längsrichtung des Konzentrator-Kissens (2) beabstandete Schwenkelemente, insbesondere Schwenkringe (8), jeweils an einem Trägerrahmen (11; 11', 11'') der Aufhängeeinrichtung (10) aufgehängt sind.

10. Vorrichtung (1) nach einem der Ansprüche 1 bis 9, **dadurch gekennzeichnet, dass** zwischen der Aufhängeeinrichtung (10) und der Schwenkeinrichtung (7) eine Schwenklagereinrichtung (18), insbesondere eine Rollenlagerung (19, 20), vorgesehen ist, wobei die Schwenklagereinrichtung (18) bevorzugt eine erste Rollenlagerung (19) an dem ersten Rahmenelement (12) der Aufhängeeinrichtung (10) und eine zweite Rollenlagerung (20) an dem zweiten Rahmenelement (13) der Aufhängeeinrichtung (10) aufweist.

11. Vorrichtung (1) nach Anspruch 10, **dadurch gekennzeichnet, dass** die Schwenkeinrichtung (7) ein Führungselement (21) für die Rollenlagerung (19, 20) aufweist, wobei ein äußeres Rollenelement (22) zum Abrollen auf der Oberseite des Führungselements (21) und ein inneres Rollenelement (23) zum Abrollen auf der Innenseite des Führungselements (21) vorgesehen sind.

12. Vorrichtung (1) nach einem der Ansprüche 9 bis 11, **dadurch gekennzeichnet, dass** die Schwenkeinrichtung (7) zumindest ein Schwenkelement mit I-förmigem oder T-förmigem Querschnitt aufweist, wobei ein oberer Flansch (25) des I-förmigen oder T-förmigen Schwenkelements als Führungselement (21) für die Rollenlagerung ausgebildet ist.

13. Vorrichtung (1) nach einem der Ansprüche 1 bis 12, **dadurch gekennzeichnet, dass** an der Aufhängeeinrichtung (10) eine Abdeckeinrichtung (26) vorgesehen ist, welche zwischen einer das Konzentrator-Kissen (2) zumindest teilweise abdeckenden Schutzstellung und einer das Konzentrator-Kissen (2) im Wesentlichen vollständig freiliegend anordnenden Staustellung überführbar ist.

14. Vorrichtung (1) nach einem der Ansprüche 1 bis 13, **dadurch gekennzeichnet, dass** die Schwenkeinrichtung (7) mit einer Halteeinrichtung (31) für das Konzentrator-Kissen (2) verbunden ist, welche zumindest einen in Längsrichtung des Konzentrator-Kissens (2) erstreckten Längsträger (32, 33), insbesondere Fachwerkträger, aufweist.

15. Vorrichtung (1) nach Anspruch 14, **dadurch gekennzeichnet, dass** die Halteeinrichtung (31) für das Konzentrator-Kissen (2) einen ersten Längsträger (32), insbesondere einen ersten Fachwerkträger, und einen zweiten Längsträger (33), insbesondere einen zweiten Fachwerkträger, aufweist, wobei der erste Längsträger (32) mit einer der Sonnenstrahlung zugewandten Oberseite des Konzentrator-Kissens (2) und der zweite Längsträger mit einer von der Sonnenstrahlung abgewandten Unterseite des Konzentrator-Kissens (2) verbunden ist.

## Claims

1. Device for concentrating solar radiation in an absorber (1'), comprising an inflatable concentrator cushion (2) which has a translucent inlet window (3) for coupling in solar radiation and a reflector film (6) for concentrating the solar radiation in the absorber (1'), which reflector film divides the concentrator cushion (2) into at least two cavities (4, 5), and comprising a device (1) for retaining the inflatable concentrator cushion (2), comprising a pivot means (7) for pivoting the concentrator cushion (2) in particular about the longitudinal axis thereof, the pivot means (7) having at least one pivot element surrounding the concentrator cushion (2) in the circumferential direction thereof, and comprising an anchoring means (9) for anchoring the pivot means (7), **characterised in that** the anchoring means (9) has a suspension means (10) for suspending the pivot means (7).

2. Device (1) according to claim 1, **characterised in that** the suspension means (10) has at least one support frame (11; 11', 11"), preferably a plurality of support frames (11; 11', 11") that are arranged so as to be spaced apart in the longitudinal direction of the concentrator cushion (2), the at least one support frame (11; 11', 11") each having at least one first frame element (12) on one long side of the concentrator cushion (2) and a second frame element (13) on the other long side of the concentrator cushion (2).

3. Device (1) according to claim 2, **characterised in that** the support frame (11; 11', 11") has a third frame element (14) above the concentrator cushion (2), which third frame element connects the first frame element (12) on one long side of the concentrator cushion (2) to the second frame element (13) on the other long side of the concentrator cushion (2).

4. Device (1) according to either claim 2 or claim 3, **characterised in that** the first frame element (12) and/or the second frame element (13) are composed of at least one first straight frame part (12a, 13a) and a second straight frame part (12b, 13b) which are arranged at an angle to one another, the first frame part (12a, 13a) preferably being arranged substantially perpendicularly in the operating state and the lower end of the first frame part (12a, 13a) being anchored in a pedestal element (34).

5. Device (1) according to any of claims 2 to 4, **characterised in that** the first frame element (12) and/or the second frame element (13) and/or the third frame element (14) are designed as profile elements, in particular as I-profiles, which extend in a plane substantially perpendicularly with respect to the longitudinal direction of the concentrator cushion (2).

6. Device (1) according to any of claims 2 to 5, **characterised in that** the suspension means (10) has at least two support frames (11; 11', 11") which are interconnected by means of at least one tension element (14), in particular a cable element.

7. Device (1) according to claim 6, **characterised in that** the at least two support frames (11; 11', 11") on the two long sides of the concentrator cushion (2) are interconnected in each case by means of at least one tension element (15), preferably in each case by means of at least two tension elements (15) tensioned crosswise.

8. Device (1) according to either claim 6 or claim 7, **characterised in that** at least one support frame (11), in particular a support frame (11') which is at the front with respect to the longitudinal direction of the concentrator cushion (2) and/or a support frame (11") which is at the rear with respect to the longitudinal direction of the concentrator cushion (2), is stayed on a base element (17) by means of a further tension element (16).

9. Device (1) according to any of claims 1 to 8, **characterised in that** the pivot element has a pivot ring (8), a plurality of pivot elements, in particular pivot rings (8), that are spaced apart in the longitudinal direction of the concentrator cushion (2) preferably each being suspended on a support frame (11; 11', 11") of the suspension means (10).

10. Device (1) according to any of claims 1 to 9, **characterised in that** a pivot bearing means (18), in particular a roller bearing (19, 20), is provided between the suspension means (10) and the pivot means (7), the pivot bearing means (18) preferably having a first roller bearing (19) on the first frame element (12) of the suspension means (10) and a second roller bearing (20) on the second frame element (13) of the suspension means (10).

11. Device (1) according to claim 10, **characterised in that** the pivot means (7) has a guide element (21) for the roller bearing (19, 20), an outer roller element (22) being provided for rolling on the upper face of the guide element (21) and an inner roller element (23) being provided for rolling on the inner face of the guide element (21).

12. Device (1) according to any of claims 9 to 11, **characterised in that** the pivot means (7) has at least one pivot element having an I-shaped or T-shaped cross section, an upper flange (25) of the I-shaped or T-shaped pivot element being designed as a guide element (21) for the roller bearing.

13. Device (1) according to any of claims 1 to 12, **characterised in that** a cover means (26) is provided on the suspension means (10), which cover means can be transferred between a protective position in which the concentrator cushion (2) is covered at least in part and a stowed position in which the concentrator cushion (2) is arranged so as to be substantially completely exposed.

14. Device (1) according to any of claims 1 to 13, **characterised in that** the pivot means (7) is connected to a retaining means (31) for the concentrator cushion (2), which retaining means has at least one longitudinal support (32, 33), in particular a truss girder, that extends in the longitudinal direction of the concentrator cushion (2).

15. Device (1) according to claim 14, **characterised in that** the retaining means (31) for the concentrator cushion (2) has a first longitudinal support (32), in particular a first truss girder, and a second longitudinal support (33), in particular a second truss girder, the first longitudinal support (32) being connected to an upper face of the concentrator cushion (2) that faces the solar radiation and the second longitudinal support being connected to a lower face of the concentrator cushion (2) that faces away from the solar radiation.

## Revendications

1. Dispositif destiné à concentrer le rayonnement solaire dans un absorbeur (1') avec un coussin concentrateur (2) gonflable qui comporte une fenêtre d'entrée (3) transparente destinée à l'introduction du rayonnement solaire et une feuille réfléchissante (6) divisant le coussin concentrateur (2) en au moins deux cavités (4, 5) et destinée à concentrer le rayonnement solaire dans l'absorbeur (1'), et avec un dispositif (1) destiné à retenir le coussin concentrateur (2) gonflable, avec un dispositif de pivotement (7) destiné à faire pivoter le coussin concentrateur (2) en particulier autour de son axe longitudinal, le dispositif de pivotement (7) comportant au moins un élément de pivotement entourant le coussin concentrateur (2) dans sa direction circonférentielle, et avec un dispositif d'ancrage (9) destiné à l'ancrage du dispositif de pivotement (7), **caractérisé en ce que** le dispositif d'ancrage (9) comporte un dispositif de suspension (10) destiné à la suspension du dispositif de pivotement (7).

2. Dispositif (1) selon la revendication 1, **caractérisé en ce que** le dispositif de suspension (10) comporte au moins un cadre porteur (11 ; 11', 11"), de préférence plusieurs cadres porteurs (11 ; 11', 11") disposés de façon espacée dans la direction longitudinale du coussin concentrateur (2), l'au moins un cadre porteur (11 ; 11', 11") comportant respectivement au moins un premier élément de cadre (12) sur un côté longitudinal du coussin concentrateur (2) et un deuxième élément de cadre (13) sur l'autre côté longitudinal du coussin concentrateur (2).

3. Dispositif (1) selon la revendication 2, **caractérisé en ce que** le cadre porteur (11 ; 11', 11") comporte un troisième élément de cadre (14) au-dessus du coussin concentrateur (2) qui raccorde le premier élément de cadre (12) sur un côté longitudinal du coussin concentrateur (2) au deuxième élément de cadre (13) sur l'autre côté longitudinal du coussin concentrateur (2).

4. Dispositif (1) selon la revendication 2 ou 3, **caractérisé en ce que** le premier élément de cadre (12) et/ou le deuxième élément de cadre (13) se composent d'au moins une première partie de cadre (12a, 13a) rectiligne et d'une deuxième partie de cadre (12b, 13b) rectiligne qui sont disposées en formant un angle entre elles, la première partie de cadre (12a, 13a) étant de préférence disposée essentiellement perpendiculairement dans l'état de fonctionnement, et la première partie de cadre (12a, 13a) étant, à l'extrémité inférieure, ancrée dans un élément de socle (34).

5. Dispositif (1) selon l'une des revendications 2 à 4, **caractérisé en ce que** le premier élément de cadre (12) et/ou le deuxième élément de cadre (13) et/ou le troisième élément de cadre (14) sont constitués en tant qu'éléments de profilé, en particulier en tant que profilés en I, qui s'étendent dans un plan essentiellement perpendiculairement à la direction longitudinale du coussin concentrateur (2).

6. Dispositif (1) selon l'une des revendications 2 à 5, **caractérisé en ce que** le dispositif de suspension (10) comporte au moins deux cadres porteurs (11 ; 11', 11") qui sont raccordés l'un à l'autre par le biais d'au moins un élément tendeur (14), en particulier un élément de câble.

7. Dispositif (1) selon la revendication 6, **caractérisé en ce que** les au moins deux cadres porteurs (11; 11', 11") sont raccordés l'un à l'autre sur les deux côtés longitudinaux du coussin concentrateur (2) par le biais de respectivement au moins un élément tendeur (15), de préférence par le biais de respectivement au moins deux éléments tendeur (15) tendus en croix.

8. Dispositif (1) selon la revendication 6 ou 7, **caractérisé en ce qu'**au moins un cadre porteur (11), en particulier un cadre porteur (11') avant par rapport à la direction longitudinale du coussin concentrateur (2) et/ou un cadre porteur (11") arrière par rapport à la direction longitudinale du coussin concentrateur (2), est haubané sur un élément de fond (17) par le biais d'un autre élément tendeur (16).

9. Dispositif (1) selon l'une des revendications 1 à 8, **caractérisé en ce que** l'élément de pivotement comprend une bague de pivotement (8), de préférence plusieurs éléments de pivotement espacés dans la direction longitudinale du coussin concentrateur (2), en particulier des bagues de pivotement (8), étant respectivement suspendues à un cadre porteur (11 ; 11', 11") du dispositif de suspension (10).

10. Dispositif (1) selon l'une des revendications 1 à 9, **caractérisé en ce que**, entre le dispositif de suspension (10) et le dispositif de pivotement (7), il est prévu un dispositif de palier pivotant (18), en particulier un roulement à rouleaux (19, 20), le dispositif de palier pivotant (18) comportant de préférence un premier roulement à rouleaux (19) sur le premier élément de cadre (12) du dispositif de suspension (10) et un deuxième roulement à rouleaux (20) sur le deuxième élément de cadre (13) du dispositif de suspension (10).

11. Dispositif (1) selon la revendication 10, **caractérisé en ce que** le dispositif de pivotement (7) comporte un élément de guidage (21) pour le roulement à rouleaux (19, 20), un élément de rouleau (22) extérieur étant prévu pour le roulement sur le côté supérieur de l'élément de guidage (21), et un élément de rouleau (23) intérieur étant prévu pour le roulement sur le côté intérieur de l'élément de guidage (21).

12. Dispositif (1) selon l'une des revendications 9 à 11, **caractérisé en ce que** le dispositif de pivotement (7) comporte au moins un élément de pivotement à section transversale en forme de I ou en forme de T, une bride (25) supérieure de l'élément de pivotement en forme de I ou en forme de T étant constituée en tant qu'élément de guidage (21) pour le roulement à rouleaux.

13. Dispositif (1) selon l'une des revendications 1 à 12, **caractérisé en ce que**, sur le dispositif de suspension (10), il est prévu un dispositif de recouvrement (26) qui peut être transféré entre une position de protection recouvrant au moins partiellement le coussin concentrateur (2) et une position d'arrimage disposant le coussin concentrateur (2) de façon essentiellement entièrement exposée.

14. Dispositif (1) selon l'une des revendications 1 à 13, **caractérisé en ce que** le dispositif de pivotement (7) est raccordé à un dispositif de retenue (31) pour le coussin concentrateur (2) qui comporte au moins un support longitudinal (32, 33) s'étendant dans la direction longitudinale du coussin concentrateur (2), en particulier une poutre en treillis.

15. Dispositif (1) selon la revendication 14, **caractérisé en ce que** le dispositif de retenue (31) pour le coussin concentrateur (2) comporte un premier support longitudinal (32), en particulier une première poutre en treillis, et un deuxième support longitudinal (33), en particulier une deuxième poutre en treillis, le premier support longitudinal (32) étant raccordé à un côté supérieur du coussin concentrateur (2) tourné vers le rayonnement solaire, et le deuxième support longitudinal étant raccordé à un côté inférieur du coussin concentrateur (2) opposé au rayonnement solaire.
